# EUROPEAN PATENT SPECIFICATION

(11) **EP 1 655 919 B1**
(45) Date of publication and mention of the grant of the patent: **22.08.2007**
(21) Application number: 04734497.3
(22) Date of filing: 24.05.2004
(51) Int. Cl.: H04L 29/06, H04L 29/12

(54) **ANALYSIS METHOD FOR USER REQUEST**
ANALYSEVERFAHREN FÜR BENUTZERANFORDERUNG
PROCEDE D'ANALYSE DE DEMANDE DE L'UTILISATEUR

(30) Priority: 14.08.2003 CN 03153289
(43) Date of publication of application: 10.05.2006
(73) Proprietor: Huawei Technologies Co., Ltd., Longgang District, Shenzhen, Guangdong 518129 (CN)
(72) Inventor: YANG, Jinchun, Huawei Administration Building, Shenzhen, Guangdong 518129 (CN); XIONG, Anyuan, Huawei Administration Building, Shenzhen, Guangdong 518129 (CN)
(74) Representative: Reinhard - Skuhra - Weise & Partner
(86) International application number: PCT/CN2004/000527
(87) International publication number: WO 2005/018189

(56) References cited:
- WO-A1-01/95144
- CN-A- 1 430 381
- CN-A- 1 435 786
- US-A1- 2002 007 404
- US-A1- 2003 061 304
- US-B1- 6 182 148

## Description

### Field of the Technology

The present invention relates to data analysis technology, more specifically to a method for analyzing User Requests.

### Background of the Invention

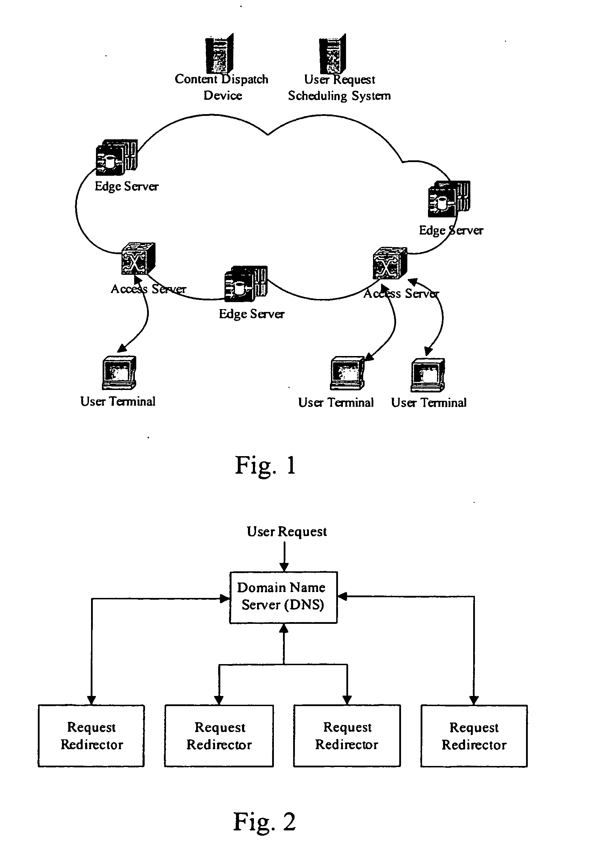

Content Delivery Network (CDN) is a technology developed to improve the QoS of Internet, which provides a comprehensive technical solution to the influence on user access effect introduced by limited network bandwidth, large volume of user access and un-balanced distribution of websites with the implementation of user access to nearby websites and intelligent distribution of network traffic. As shown in Figure 1, CDN comprises three kinds of devices in general: Edge Server (ES) distributed on the edge of the network, Central Content Delivery Facility transferring contents to ES, and User Request Routing System. The fundamental of CDN is: push the contents of a website in an existing Internet from the backbone of the network to the "edge" of the network closest to the user, i.e. CDN can release the information of an Internet Content Provider (ICP) website to edge devices of the network in advance, for example, release the information to an ES, making users obtain a high-speed response from a nearby edge device when they access a website so as to reduce the factors such as transmission delay and network jittering which influence the access effect, and providing users with orderly and high-quality services so that they could get needed information at the highest speed from the nearest place. CDN greatly mitigates the traffic congestion on the Internet, making websites able to provide content services with huge data-consumption, such as video programs, audio on demand and so on; and at the same time, enhancing the reliability of such services as online trade and network banking.

In the three kinds of devices involved in CDN, the function of the User Request Routing System is: when receiving a content request from a user, the User Request Routing System selects a most appropriate ES distributed on the edge of the network, and instructs the ES to provide the content for the user. In general, take the Internet as an example, the information transferred by the user comprises the network information of the user and the content requesting information of the user, where the network information comprises the source IP address, the destination IP address, the port occupied by the service requested by the user and so on, and the content requesting information comprises a Uniform Resource Locator (URL) character string.

U.S Patent Application Publication No. 2003/061304 A1, entitled "method and apparatus for discovering client proximity using in-line translations", discloses a method for determining a chronometrically optimal location for a client based on proximity measurements on established connections that are a result of requests for actual content. And U.S Patent Application Publication No. 2002/007404 Al, discloses a system for caching network resources in an intermediary server topologically located between a client and a server in a network.

The existing User Request Routing Systems have different analysis granularities for different User Requests, and two methods are usually adopted:

One method is: analyze the User Request to the third layer of ISO defined network protocol, i.e. identify only the network information of the user, analyze to obtain the IP address of the user by means of a Domain Name Server (DNS), and find out an appropriate ES according to the IP address of the user according to a certain rule, Round-Robin for example. However, this method can only obtain the network information of the user, thus the obtained information is relatively limited, leading to some problems in the follow-up assignment of ES, for example, and the assigned ES may have no content as User requested.

The other method is: analyze the User Request to a degree as "content", i.e. analyze the URL character string. In this way, not only the IP address of the user, but also the file the user wants to access could be learned, i.e. carrying out the Seventh layer (L7) identification. However, this granularity of analysis usually depends on the services provided, for example, when a user desires a Video On Demand service, after the request is accepted, the user will be on the state of watching the programs with few access requests transferred such that it is possible for the User Request Routing System to analyze the User Request to the seventh layer, thus making more effective Routing of User Requests among servers. When a user wants to access Web contents, however, if the User Request Routing System analyzes the User Request to the seventh layer, the load of the User Request Routing System will be greatly increased due to a large amount of access requests.

It is obvious that, when a network requires accurate analysis of content requests and there is a great deal of such User Requests, there will be a heavy load on the User Request Routing System and serious problems existed in both of the above methods. On one hand, analyzing the User Request only to the network layer is not comprehensive enough, which affects the accuracy of the follow-up assignment of ES; on the other hand, analyzing all the User Requests to content brings a heavy load to the User Request Routing System. So, single-mode analysis of User Requests cannot cope with this dilemma.

### Summary of the Invention

In view of the above, an object of the present invention is to provide a method for analyzing User Requests, which can make an accurate analysis of content while handling a relatively large volume of access.

The invention adopts a method to analyze User Requests, implementing IP-layer analysis of a User Request through DNS, and implementing content analysis through a Request Redirector. This method of analysis comprises:
the DNS first analyzing the User Request from a user terminal to IP layer, obtaining an IP address of the User Terminal; and assigning a selected Request Redirector for the User Request;
said selected Request Redirector implementing a content layer analysis for the received User Request and obtaining information about a requested content; and
said selected Request Redirector, locating a server providing the content needed by the user terminal for the User Request according to information about the requested content.

After the DNS assigns the Request Redirector for the User Request, the method further comprises: said DNS returning the IP address of the selected Request Redirector to the User Terminal; and the User terminal sending the User Request to be analyzed to the selected Request Redirector according to the returned IP address.

The method further comprises: said selected Request Redirector returning the IP address of the located server to the User Terminal; the User Terminal accessing the located server according to the IP address returned by the selected Request Redirector; and the server providing the requested content for the User Terminal.

The method further comprises: after analyzing the User Request in the IP layer to obtain an IP address of the User Terminal, the DNS judging whether the content that the user wants to access is a Web content, if yes, locating for the User Request a server that can provide the Web content, otherwise, assigning the selected Request Redirector for the current User Request.

The method further comprises: the DNS selecting the Request Redirector to be assigned for the current User Request with round robin mechanism. And said procedure of selecting the Request Redirector further comprises:
a1. configuring an identification variable X for each IP address record in a database to denote the analysis state of each IP address record, and initially resetting the identification variables X corresponding to all the records, wherein said IP address record comprises a Domain Name and the IP address of the Request Redirector corresponding to the Domain Name.
a2. according to the analysis result, finding in the database all the records with the same Domain Name as that of the current User Request, and obtaining one of the IP address records in order;
a3. judging whether the corresponding identification variable X of the obtained IP address record is reset, if yes, returning the IP address of the Request Redirector in this record to the User Terminal, setting the identification variable X corresponding to this record, and ending the selecting procedure, otherwise, proceeding to Step a4; and
a4. judging whether there are still records left, if yes, obtaining the next record in order and returning to Step a3; otherwise, resetting the identification variables X corresponding to all the IP address records found in Step a2, and returning to Step a3.

Here, the number of DNS and Request Redirectors are not fixed, which can be one or more than one. In addition, when the DNS determines that it is a Web content that the user wants to access, the DNS may directly locate for the User Request a server that can provide the Web content, thus reducing the pressure on the Request Redirector.

In accordance with the method of this invention for analyzing User Requests, DNS will only analyze requests to obtain domain names, i.e. carry out big-granularity analyses of requests, by which User Requests are distributed to each Request Redirector by certain means, such as polling, and more specifically as Round-Robin, and the User Requests are analyzed to content by each Request Redirector. In this way, user accesses are balanced to a certain extent by the DNS while the access volume of each Request Redirector is not very large such that content-level identification is feasible. Therefore, this compound-mode analysis of User Requests can not only protect the investment of existing devices, but also be adapted to layered and graded network architecture. Since different processing operations are made in connection with different services with request for Web contents separated in advance, system stability and locating accuracy are ensured.

### Brief Description of the Drawings

Figure 1 is a schematic diagram illustrating the networking architecture of a CDN according to the prior art;
Figure 2 is a schematic diagram illustrating the fundamental of the technical scheme according to an embodiment of the present invention;
Figure 3 is a schematic diagram illustrating the operating procedure according to an embodiment of the present invention;
Figure 4 is a flowchart illustrating the operating procedure of DNS assigning a Request Redirector for a User Request according to an embodiment of the present invention.

### Detailed Description of the Invention

The main idea of the embodiments of the present invention is: combining the third-layer analysis and the seventh-layer analysis, first distributing the User Requests to different Request Redirectors via the third-layer analysis, and further analyzing the received User Request to content by the corresponding Request Redirector, i.e. implementing the seventh-layer analysis by the Request Redirector, and according to the analysis result, locating for the User Request a server that can provide the content.

Take the application of an embodiment of the present invention in a CDN as an example and a detailed description of the embodiment of the present invention will be given hereinafter with reference to the accompanying drawings.

As shown in Figure 2, in a CDN, said DNS in the method of the embodiment of the present invention is also called a Redirection DNS to distinguish from a Local DNS (LDNS); said Request Redirector in a CDN is equivalent to a User Request Routing System that can identify the content. It can be seen from Figure 2 that, the DNS is connected with a plurality of Request Redirectors at the same time, and each User Request is distributed to different Request Redirectors by the DNS for content analysis.

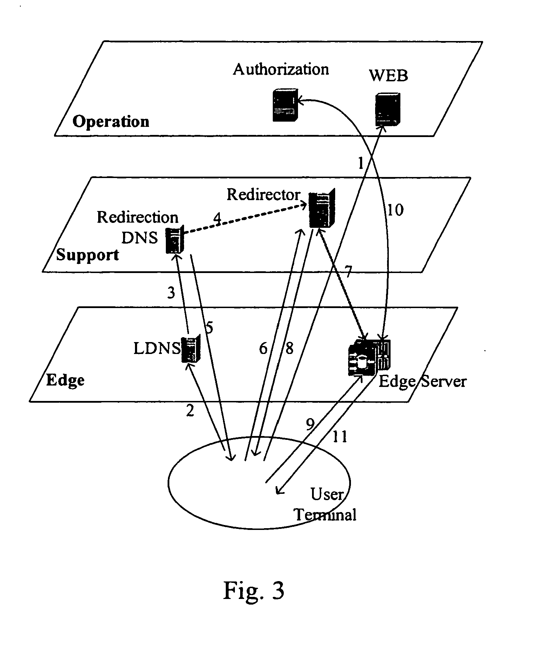

In a CDN, a typical operating procedure for analyzing User Requests according to the method of an embodiment of the present invention is shown in Figure 3, which comprises:
a user sending a User Request for accessing certain content to a User Terminal;
the User Terminal requesting the Local DNS (LDNS) to carry out a Domain Name analysis for the received User Request;
after receiving the User Request from the User Terminal, the LDNS sending the User Request to a Redirection DNS, and requesting the Redirection DNS to carry out the Domain Name analysis;
the Redirection DNS analyzing the User Request to the network layer, obtaining such information as an IP address of the user, a destination IP address and so on, and determining a Redirector to be assigned for the current User Request by polling, especially by Round-Robin. Here, an IP binding mode can also be adopted for determining a Redirector, where IP addresses within a certain scope may be bound with a Redirector. In the IP binding mode, after making analysis of the user's IP address, the Redirection DNS can further determine the Redirector to be assigned for the current User Request just by judging the scope to which the IP address belongs;
the Redirection DNS returning the IP address of the assigned Redirector to the User Terminal;
the User Terminal accessing the assigned Redirector according to the IP address of the Redirector returned, i.e. sending the User Request containing the access content to the assigned Redirector;
the Redirector conducting content analysis for the User Request, and detecting nearby ESs according to the analyzing result, i.e. the content that the user wants to access. Here, said detecting nearby ESs typically refers to: detecting the distance between an ES and the user, whether the ES has the content needed by the user, and whether the ES is busy or idle. The purpose of the detection is to find, according to the analyzed content to be accessed by the user, the ES that satisfies the requirement, i.e. which ES can provide the corresponding content, and to obtain such information as the distance between the ES and the user, and whether the ES is busy or idle, where the detection step can be implemented by a means in the prior art;
the Redirector redirecting the user's access to an appropriate ES according to the result of detection and a certain Routing strategy, i.e. selecting an optimum ES, and returning the IP address of the selected ES to the User Terminal. The said certain Routing strategy refers to selecting an optimum ES according to such factors as the load of the ES, the optimum routing and etc. For example, there are three edge servers, A, B and C that can provide the needed information for the current user, and at present A is the most idle ES, thus A is selected. For another example, there are three edge servers, A, B and C that can provide the needed information for the current user, and B is the ES that is closest to the current user, thus ES B is selected;
the User Terminal accessing the selected ES according to the obtained IP address of the ES;
the ES initiating an authorization process for the current user by means of a Centralized Authentication and Forwarding mechanism to a User Management System, such as Authentication Authorization Server, and the User Management System returning an authentication result to the ES by means of the Authentication and Forwarding mechanism;
if the authentication is passed, the ES providing a content service to the current user; otherwise, denying the access of the current user.

During the above procedure, in order to reduce the pressure of Request Redirectors, different processing methods may be adopted for different services. For example, after analyzing the current User Request to the network layer, the DNS may decide whether the content the user desires to access is a Web content, if yes, locating for the User Request a server that can provide the Web content; otherwise, assigning a Request Redirector for the current User Request.

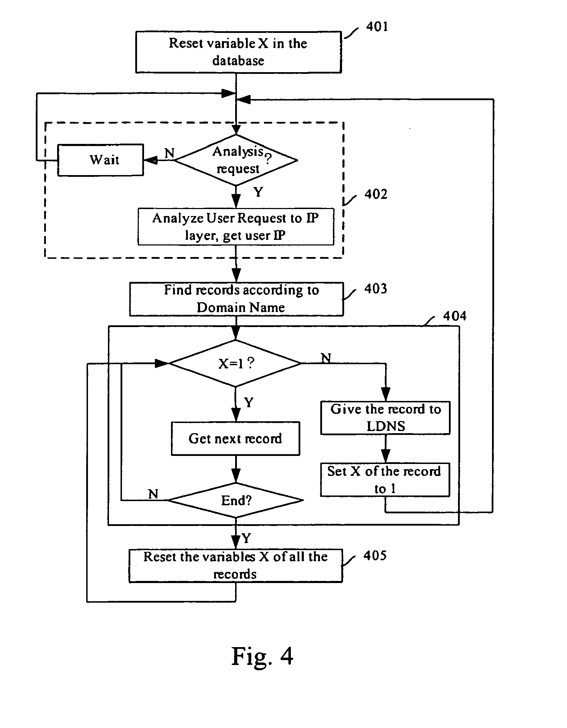

In the Redirection DNS analyzing the User Request to the network layer step, the Redirection DNS assigning a Redirector for the User Request by polling can be implemented by the process shown in Figure 4, which comprises the steps of:
Step 401: there are a plurality of IP address records in the database of the Redirection DNS, and each record comprises a Domain Name and the IP address of the Redirector corresponding to the Domain Name. Configuring an identification variable X for each IP address record in the database to denote the analytical state of the record, and the identification variables X of all the records in the database being initially reset, for example, making the value of the identification variable X equal to 0. In this embodiment, resetting the identification variable means that the corresponding Redirector has not been assigned so far, and setting the identification variable means that the corresponding Redirector has been assigned already.
Step 402: after obtaining a User Request to be analyzed from the Local DNS, the Redirection DNS analyzing the User Request to the network layer first, obtaining such network information as the user's IP address and the destination IP address according to the User Request.
Step 403: the Redirection DNS further obtaining the Domain Name of the user according to the IP address in the analysis result, and finds in its own database the IP address records that have the same Domain Name as the user, wherein the IP address of each record is the IP address of a Redirector, thus one or a plurality of optional Redirectors can be obtained, and proceeding to Step 404 to select one Redirector from the obtained Redirectors by polling, and especially by Round-Robin.
Step 404~405: the Redirection DNS getting a record in order and judging whether the identification variable X corresponding to the record is reset, if yes, returning the IP address in this record to the user, setting the identification variable X which indicates the analytical state of this record, and returning to Step 402 to wait for a next User Request; otherwise, if the identification variable X corresponding to the record is set, getting a next record in order till finding a record in which the identification variable X is reset. The said setting here may comprise making the value of the identification variable X equal to 1.

If the identification variables X corresponding to all the IP address records found in Step 403 are set, i.e. no Redirector corresponding to any of the IP address records can be found to assign, reset all the identification variables X corresponding to the IP address records found in Step 403 and return to Step 404.

Steps 401~405 show a method of selecting a Request Redirector by polling. In accordance with the embodiment of the present invention, the DNS can also make a balanced selection of Request Redirectors by other means.

It can be seen from the above that, in a CDN, the method of the embodiment of the present invention makes it unnecessary for ICP websites to redirect a user's request message for accessing contents of stream media; and since a user request is scheduled according to content in this embodiment, the ratio of a user directly accessing the desired contents is raised in the subsequent Routing process. As the embodiment of the present invention is based on content Routing, it is unnecessary to save in buffer content in a plurality of ES if the edge servers are in one logical group, which improves the total capacity of buffered content in these edge servers and optimizes the memory characteristics. Moreover, only one PUSH is needed to send content to one ES, thus, the total times of PUSH are reduced and the network load is lightened.

What is said above is just a preferred embodiment of the present invention applied in a CDN. The method of the present invention can be applied to various circumstances that require address or data analysis and the above embodiment should not be construed as limiting the protection range of the present invention.

## Claims

1. A method for analyzing User Requests, applicable to a network including at least a DNS and a Request Redirector, the method comprising:
the DNS analyzing the User Request from a user terminal to Internet Protocol (IP) layer, obtaining an IP address of the User Terminal; and assigning a selected Request Redirector for the User Request (4);
said selected Request Redirector implementing a content layer analysis for the received User Request and obtaining information about a requested content ; and
said selected Request Redirector locating a server providing the content needed by the user terminal for the User Request according to information about the requested content (7).

2. The method according to Claim 1, after the DNS assigning the Request Redirector for the User Request, further comprising:
the DNS returning the IP address of the selected Request Redirector to the User Terminal (5); and
the User terminal sending the User Request to be analyzed to the selected Request Redirector according to the returned IP address (6).

3. The method according to Claim 1, further comprising:
said selected Request Redirector returning the IP address of the located server to the User Terminal (8);
the User Terminal accessing the located server according to the IP address returned by the selected Request Redirector (9); and
the server providing the requested content for the User Terminal (11).

4. The method according to Claim 1, further comprises:
after analyzing the User Request in the IP layer to obtain an IP address of the User Terminal, the DNS judging whether the content that the user wants to access is a Web content, if yes, locating for the User Request a server that can provide the Web content; otherwise, assigning the selected Request Redirector for the current User Request (4).

5. The method according to Claim 1, further comprising:
the DNS selecting the Request Redirector to be assigned for the current User Request with round robin mechanism.

6. The method according to Claim 5, wherein said selecting the Request Redirector further comprises:
a1. configuring an identification variable X for each IP address record in a database to denote the analytical state of each IP address record, and initially resetting all the identification variables X corresponding to the records (401), wherein said IP address record comprises a Domain Name and the IP address of the Request Redirector corresponding to the Domain Name.
a2. according to the analysis result (402), finding in the database all the records with the same Domain Name as that of the current User Request, and obtaining one of the IP address records in order (403);
a3. judging whether the corresponding identification variable X of the obtained IP address record is reset, if yes, returning the IP address of the Request Redirector in this record to the User Terminal, setting the identification variable X corresponding to this record and ending the selecting procedure, otherwise, proceeding to Step a4 (404); and
a4. judging whether there are still records, if yes, obtaining the next record in order and returning to Step a3 (404); otherwise, resetting all the identification variables X corresponding to the IP address records found in Step a2 (405), and returning to Step a3.

## Patentansprüche

1. Verfahren zum Analysieren von Benutzeranforderungen, welches in einem Netzwerk anwendbar ist, welches wenigstens einen DNS und ein Anforderungs-Umleitglied beinhaltet, wobei das Verfahren aufweist:
Analysieren der Benutzeranforderung durch den DNS, von einem Benutzerendgerät an die Internet-Protokoll-(IP-)Schicht, wobei eine IP-Adresse des Benutzerendgerätes erhalten wird; und Zuweisen eines ausgewählten Anforderungs-Umleitgliedes für die Benutzeranforderung (4);
wobei das ausgewählte Anforderungs-Umleitglied eine Inhaltsschichtanalyse für die empfangene Benutzeranforderung implementiert und eine Information über einen angeforderten Inhalt erhält; und
wobei das ausgewählte Anforderungs-Umleitungsglied einen Server lokalisiert, welcher den von dem Benutzerendgerät benötigten Inhalt für die Benutzeranforderung entsprechend der Information über den angeforderten Inhalt (7) liefert.

2. Verfahren nach Anspruch 1, welches nach der DNS-Zuordnung des Anforderungs-Umleitungsgliedes für die Benutzeranforderung ferner aufweist:
Zurückschicken der IP-Adresse des ausgewählten Anforderungs-Umleitgliedes an das Benutzerendgerät (5) durch den DNS; und
Senden der Benutzeranforderung, welche zu analysieren ist, an das ausgewählte Anforderungs-Umleitglied entsprechend der zurückgeschickten IP-Adresse (6) durch das Benutzerendgerät.

3. Verfahren nach Anspruch 1, welches ferner aufweist:
Zurückschicken der IP-Adresse des georteten Servers an das Benutzerendgerät (8) durch das ausgewählte Anforderungs-Umleitungsglied;
Zugreifen des georteten Servers entsprechend der IP-Adresse, welche durch das ausgewählte Anforderungs-Umleitglied (9) zurückgeschickt ist, durch das Benutzerendgerät; und
Liefern des angeforderten Inhalts für das Benutzerendgerät (11) durch den Server.

4. Verfahren nach Anspruch 1, welches ferner aufweist:
nach dem Analysieren der Benutzeranforderung in der IP-Schicht, um eine IP-Adresse des Benutzerendgeräts zu erzielen, Beurteilen durch den DNS, ob der Inhalt, auf welchen der Benutzer zuzugreifen wünscht, ein Web-Inhalt ist, falls ja, Lokalisieren eines Servers für die Benutzeranforderung, welcher den Web-Inhalt liefert kann; anderenfalls Zuordnen des ausgewählten Anforderungs-Umleitgliedes für die aktuelle Benutzeranforderung (4).

5. Verfahren nach Anspruch 1, welches ferner aufweist:
Auswählen des Anforderungs-Umleitgliedes, welches für die aktuelle Benutzeranforderung zuzuordnen ist, mit einem zyklischen Suchvorgehen durch den DNS.

6. Verfahren nach Anspruch 5, wobei das Auswählen des Anforderungs-Umleitgliedes ferner aufweist:
a1. Konfigurieren einer Identifikationsvariablen X für jede IP-Adressen-Aufzeichnung in einer Datenbank, um den analytischen Zustand jeder IP-Adressen-Aufzeichnung anzuzeigen, und zuerst Zurücksetzen all der Identifikationsvariablen X entsprechend den Aufzeichnungen (401), wobei die IP-Adressen-Aufzeichnung einen Domain-Namen und die IP-Adresse des Anforderungs-Umleitgliedes entsprechend dem Domain-Namen aufweist.
a2. entsprechend des Analyseergebnisses (402) Finden aller Aufzeichnungen mit den gleichen Domain-Namen wie dem der aktuellen Benutzeranforderung in der Datenbank und Erhalten einer der IP-Adressen-Aufzeichnungen (403);
a3. Beurteilen, ob die entsprechende Identifikationsvariable X der erhaltenen IP-Adressen-Aufzeichnung zurückgesetzt wird, wenn ja, Zurückschicken der IP-Adresse des Anforderungs-Umleitgliedes in dieser Aufzeichnung an das Benutzerendgerät, Einstellen der Identifikationsvariablen X entsprechend dieser Aufzeichnung und Beenden des Auswahlverfahrens, anderenfalls Fortfahren mit dem Schritt a4 (404); und
a4. Beurteilen, ob es noch Aufzeichnungen gibt, falls ja, Erhalten der nächsten Aufzeichnung in der Reihenfolge und Zurückkehren zu Schritt a3 (404); anderenfalls Zurücksetzen aller Identifikationsvariablen X entsprechend den IP-Adressen-Aufzeichnungen, welche im Schritt a2 gefunden wurden (405), und Zurückkehren zum Schritt a3.

## Revendications

1. Procédé destiné à analyser des requêtes utilisateur, applicable à un réseau incluant au moins un DNS et un dispositif de réacheminement de requêtes, le procédé comprenant les étapes consistant en ce que :
- le DNS analyse la requête utilisateur depuis un terminal utilisateur jusqu'à la couche de protocole Internet (IP), obtient une adresse IP du terminal utilisateur ; et affecte un dispositif de réacheminement de requêtes sélectionné pour la requête utilisateur (4) ;
- ledit dispositif de réacheminement de requêtes met en oeuvre une analyse de la couche de contenu pour la requête utilisateur reçue et obtient des informations concernant un contenu pour lequel une requête est lancée ; et
- ledit dispositif de réacheminement de requêtes localise un serveur fournissant le contenu requis par le terminal utilisateur pour la requête utilisateur selon des informations concernant le contenu pour lequel une requête est lancée (7).

2. Procédé selon la revendication 1, comprenant en outre, après l'affectation par le DNS du dispositif de réacheminement de requêtes pour la requête utilisateur, les étapes consistant en ce que :
- le DNS retourne l'adresse IP du dispositif de réacheminement de requêtes sélectionné au terminal utilisateur (5); et
- le terminal utilisateur envoie la requête utilisateur à analyser vers le dispositif de réacheminement de requêtes sélectionné selon l'adresse IP retournée (6).

3. Procédé selon la revendication 1, comprenant en outre les étapes consistant en ce que :
- le dispositif de réacheminement de requêtes sélectionné retourne l'adresse IP du serveur localisé au terminal utilisateur (8) ;
- le terminal utilisateur accède au serveur localisé selon l'adresse IP retournée par le dispositif de réacheminement de requêtes sélectionné (9) ; et
- le serveur fournit le contenu pour lequel une requête est lancée au terminal utilisateur (11).

4. Procédé selon la revendication 1, comprenant en outre les étapes consistant en ce que :
- le DNS, après analyse de la requête utilisateur dans la couche IP afin d'obtenir une adresse IP du terminal utilisateur, juge si le contenu auquel l'utilisateur souhaite accéder est un contenu Web, le cas échéant, localise pour la requête utilisateur un serveur qui puisse fournir le contenu Web ; sinon, affecte le dispositif de réacheminement de requêtes sélectionné pour la requête utilisateur en cours (4).

5. Procédé selon la revendication 1, comprenant en outre les étapes consistant en ce que :
- le DNS sélectionne le dispositif de réacheminement de requêtes à affecter à la requête utilisateur en cours par un mécanisme de recherche cyclique.

6. Procédé selon la revendication 5, dans lequel ladite sélection du dispositif de réacheminement de requêtes comprend en outre les étapes consistant à:
a1. - configurer une variable d'identification X pour chaque enregistrement d'adresse IP dans une base de données afin de désigner l'état analytique de chaque enregistrement d'adresse IP, et initialement remettre à zéro toutes les variables d'identification X correspondant aux enregistrements (401), dans lequel ledit enregistrement d'adresse IP comprend un nom de domaine et l'adresse IP du dispositif de réacheminement de requêtes correspondant au nom de domaine.
a2. - selon le résultat d'analyse (402), trouver dans la base de données tous les enregistrements ayant le même nom de domaine que celui de la requête utilisateur en cours, et obtenir l'un des enregistrements d'adresse IP dans l'ordre (403) ;
a3. - juger si la variable d'identification X correspondante de l'enregistrement d'adresse IP obtenu est remise à zéro, le cas échéant, retourner l'adresse IP du dispositif de réacheminement de requêtes dans cet enregistrement vers le terminal utilisateur, mettre à un la variable d'identification X correspondant à cet enregistrement et terminer la procédure de sélection, sinon, procéder à l'étape a4 (404) ; et
a4. - juger s'il existe encore des enregistrements, le cas échéant, obtenir l'enregistrement suivant dans l'ordre et retourner à l'étape a3 (404) ; sinon, remettre à zéro toutes les variables d'identification X correspondant aux enregistrements d'adresse IP trouvés à l'étape a2 (405) et retourner à l'étape a3.
